# FASCICULE DE BREVET EUROPEEN

(11) **EP 1 367 786 B1**
(45) Date de publication et mention de la délivrance du brevet: **05.04.2006**
(21) Numéro de dépôt: 03291048.1
(22) Date de dépôt: 30.04.2003
(51) Int. Cl.: H04L 12/58, H04M 3/533, H04M 3/42

(54) **Procédé et dispositif de diffusion de données vers des terminaux différents**
Verfahren und Vorrichtung zur Datenübertragung an verschiedene Endgeräte
Method and device for data transmission towards different terminals

(30) Priorité: 27.05.2002 FR 0206456
(43) Date de publication de la demande: 03.12.2003
(73) Titulaire: FRANCE TELECOM, 75015 Paris (FR)
(72) Inventeur: Chenevat, Jean-Michel, 38000 Grenoble (FR); Petit, Jean-Claude, 22700 Perros Guirec (FR); Depinois, Jean-François, 22220 Treguier (FR); Martin, Jean-Marie, 22300 Lannion (FR)
(74) Mandataire: Cabinet Martinet & Lapoux

(56) Documents cités:
- WO-A-01/58172
- GB-A- 2 366 032
- US-A- 5 872 926

## Description

La présente invention concerne la diffusion d'une donnée vers plusieurs terminaux d'un destinataire, ou plus généralement de plusieurs données vers les terminaux respectifs de plusieurs destinataires.

Elle concerne plus particulièrement l'élaboration de fonctionnalités pour diffuser des données hétérogènes émises par un expéditeur vers des destinataires, sans que l'expéditeur se préoccupe de la réception des données et notamment du terminal de chaque destinataire qui recevra la donnée attendue.

Actuellement des systèmes télé-informatiques incorporent une fonction de diffusion pour téléphone ou par messagerie électronique. Par exemple des messageries vocales unifiées proposent à leurs utilisateurs une notification pour déposer un message par courrier électronique (e-mail), téléphone ou télécopie.

Par exemple, la demande de brevet britannique GB 2366032 propose un serveur de notification de messages électroniques dans lequel des données d'un usager sont diffusées vers des dispositifs terminaux d'un destinataire à travers des passerelles, en fonction de préférences du destinataire, non précisées, et d'identificateurs et de caractéristiques des terminaux du destinataire.

Aucun de ces systèmes ne permet de construire précisément et sans ambiguité une stratégie de diffusion pour diffuser une donnée depuis un terminal ou un serveur intermédiaire expéditeur de la donnée vers des terminaux d'un destinataire présentant des types de média, c'est-à-dire des moyens ou canaux de transmission et des moyens de réception de données, différents comme un téléphone, un télécopieur, une messagerie électronique écrite ou vocale, un site web, etc...

L'objectif de l'invention est de satisfaire à ce besoin de construction d'une stratégie de diffusion de donnée et plus précisément de construction de séquences d'appel d'un ou plusieurs destinataires' à partir d'un ensemble de critères prédéfinis pré-enregistrés ou bien déterminés dans une requête d'expéditeur et relatifs notamment à des types de média.

A cette fin, un procédé pour diffuser une donnée vers des terminaux d'un destinataire à travers des moyens de diffusion en réponse à une requête d'expéditeur contenant la donnée et un identificateur du destinataire, des identificateurs et des caractéristiques des terminaux du destinataire étant recherchés en correspondance avec l'identificateur du destinataire dans une première mémoire, est caractérisé par les étapes suivantes :
- détermination pour la donnée de types de média à travers lesquels la donnée est à transmettre aux terminaux du destinataire,
- sélection des identificateurs des terminaux du destinataire ayant des types de média à travers lesquels les terminaux de destinataire sont susceptibles de recevoir la donnée et qui sont compatibles avec l'un des types de média pour la donnée,
- sélection dans une deuxième mémoire des identificateurs et de caractéristiques de moyens de diffusion ayant chacun un type de média compatible avec au moins l'un des types de média pour la donnée,
- association de l'identificateur de chacun des terminaux sélectionnés à l'identificateur d'un moyen de diffusion sélectionné ayant un type de média compatible avec celui du terminal, et
- établissement d'une requête de multidiffusion comprenant au moins une séquence d'appel pour appeler les terminaux sélectionnés du destinataire respectivement depuis les moyens de diffusion associés, la séquence d'appel contenant les caractéristiques de chaque terminal sélectionné à appeler, les caractéristiques du moyen de diffusion associé à chaque terminal sélectionné et la donnée à diffuser.

Le procédé de l'invention permet à un serveur de service expéditeur de la donnée de limiter au minimum la description dans sa requête d'expéditeur. Dans une réalisation simple, seul l'identificateur du destinataire et la donnée, ou des identificateurs de destinataires et des données à diffuser vers ceux-ci peuvent être spécifiés.

Bien qu'ils puissent être contenus dans la requête d'expéditeur, les types de média de la donnée sont de préférence déterminés selon une stratégie de contenu identifiée dans la requête d'expéditeur ; si aucune stratégie de contenu n'est indiquée dans la requête, une stratégie de contenu prédéterminée par défaut est appliquée.

Selon une réalisation préférée, l'expéditeur de la donnée sélectionne lui-même une stratégie d'accès déterminant les terminaux des destinataires qui sont susceptibles d'être appelés pour que l'un d'eux puisse recevoir les données. Pour cette réalisation, le procédé comprend une désignation d'identificateurs de terminaux sélectionnés selon la stratégie d'accès qui est identifiée dans la requête d'expédition ou par défaut pour le destinataire et la donnée.

Selon une autre réalisation préférée, l'expéditeur de la donnée sélectionne lui-même une stratégie d'appel déterminant la procédure d'appel de chaque terminal désigné du destinataire. Pour cette réalisation, le procédé comprend une association de l'identificateur désigné d'un terminal selectionné à l'identificateur d'un moyen de diffusion ayant un type de média compatible avec celui du terminal selectionné et déterminé par une stratégie d'appel identifiée dans la requête d'expéditeur ou par défaut pour le destinataire et la donnée. Par exemple, la stratégie d'appel peut comprendre un nombre et une fréquence de tentatives d'appel de chaque terminal dont l'identificateur est désigné et des périodes d'appel de chaque terminal, à introduire dans la requête de multidiffusion.

L'invention concerne également la diffusion de la donnée vers plusieurs destinataires ayant chacun des terminaux respectifs. La requête d'expéditeur contient en outre des identificateurs des destinataires ou l'identificateur d'une liste des destinataires identifiables dans la première mémoire. La requête de multidiffusion contient en outre plusieurs séquences d'appel de terminaux sélectionnés respectivement pour les destinataires.

L'invention prévoit également la diffusion de plusieurs données respectivement vers les destinataires, la ou les séquences d'appel pour un destinataire dans la requête de multidiffusion contenant en outre la ou les données à diffuser vers les terminaux sélectionnés du destinataire. Plus généralement, le procédé selon l'invention permet de diffuser une ou plusieurs données de natures différentes vers un ou plusieurs destinataires équipés chacun d'un ou de plusieurs terminaux quelconques.

En pratique, le procédé de diffusion selon l'invention est mis en oeuvre dans une plate-forme gestionnaire de multidiffusion spécifique contenant les première et deuxième mémoires et reliée par un réseau de paquets à des serveurs de service applicatif émettant des requêtes d'expéditeurs et aux moyens de diffusion. Chaque moyen de diffusion reçoit des informations respectives contenues dans la requête de multidiffusion telles que les séquences d'appel des terminaux respectifs.

Inversement, de préférence, la plate-forme reçoit un résultat de diffusion depuis chaque moyen de diffusion associé à un terminal sélectionné pour indiquer si le moyen de diffusion a été appelé par la plate-forme et si une donnée a été diffusée par le moyen de diffusion vers le terminal sélectionné.

D'autres caractéristiques et avantages de la présente invention apparaîtront plus clairement à la lecture de la description suivante de plusieurs réalisations préférées de l'invention en référence aux **dessins annexés** correspondants dans lesquels :
- la figure 1 est un bloc-diagramme d'un système de multidiffusion de données selon l'invention ;
- la figure 2 est un bloc-diagramme schématique d'un serveur gestionnaire de multidiffusion selon l'invention ;
- la figure 3 est un bloc-diagramme de module logiciel dans le serveur gestionnaire de multidiffusion propres à élaborer une stratégie de diffusion ; et
- la figure 4 est un algorithme d'étapes principales d'un procédé pour diffuser des données vers des terminaux de destinataire mis en oeuvre dans le serveur gestionnaire de multidiffusion.

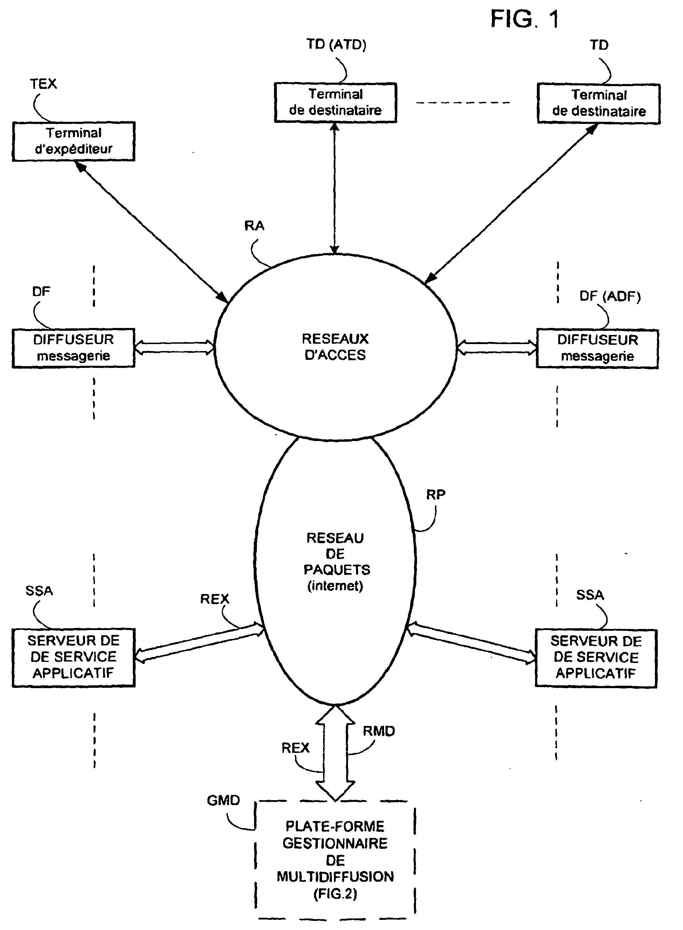

En référence à la figure 1, un système de multidiffusion de données comprend des terminaux d'usager, chacun tantôt terminal d'expéditeur TEX, tantôt terminal de destinataire TD, des serveurs de service applicatif SSA appelés par des terminaux d'expéditeurs de messages de données TEX, des serveurs dits diffuseurs DF diffusant des données d'expéditeurs vers des terminaux de destinataires TD, et une plate-forme gestionnaire de multidiffusion GMD propre à l'invention. Les terminaux TEX et TD et les diffuseurs DF sont reliés entre eux à travers des médias de divers types, rassemblés notamment en des réseaux d'accès connus RA, par exemple le réseau téléphonique commuté ou des réseaux radiotéléphoniques cellulaires, et sont reliés aux serveurs SSA et à la plate-forme GMD à travers un réseau de paquets RP comme le réseau internet.

Les serveurs de service applicatif SSA offrent par exemple des fonctionnalités de communication entre des terminaux des membres d'une association, des fonctionnalités d'échange de documents de nature différente entre des membres d'un même groupe, ou plus généralement des fonctionnalités de diffusion de messages vers des terminaux de type prédéterminé de destinataires prédéterminés.

La plate-forme gestionnaire de multidiffusion GMD a pour rôle d'élaborer et de mettre en oeuvre une stratégie adaptée à une requête d'expéditeur REX transmise par l'un des serveurs de service applicatif SSA. La requête REX contient en général des données émises par le terminal TEX d'un expéditeur qui souhaite transmettre les données à un ou plusieurs terminaux TD d'un ou de plusieurs destinataires via un ou plusieurs médias différents. La plate-forme gestionnaire est en relation avec plusieurs diffuseurs DF. Chacun des diffuseurs est capable de transmettre les données à diffuser sur un ou plusieurs médias, selon leurs particularités techniques. Un média comporte un moyen ou canal de transmission tel qu'une ligne téléphonique fixe ou un canal de trafic personnel ou professionnel dans un réseau de radiotéléphonie cellulaire, ou une messagerie vocale ou écrite (e-mail), ou un enregistreur de télécopie. L'un ou quelques uns ou tous les types de transmetteurs pour ces médias peuvent être inclus dans un diffuseur DF pour plusieurs destinataires.

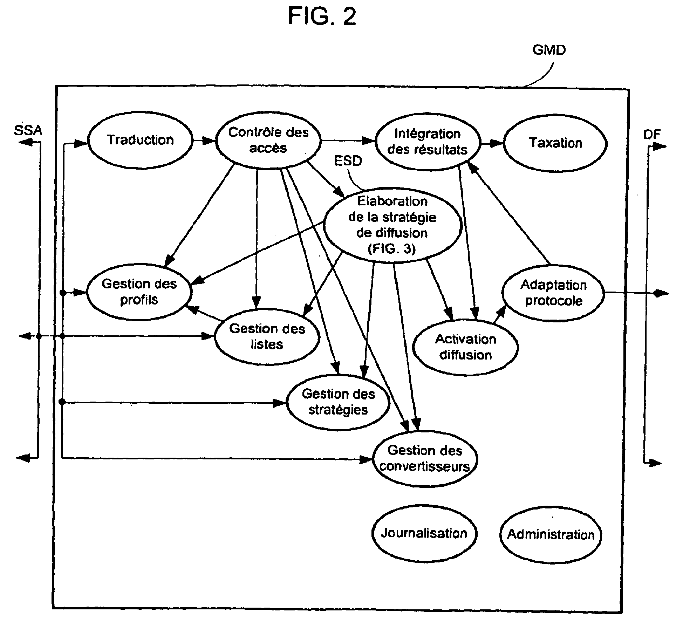

La plate-forme gestionnaire de multidiffusion GMD contient divers modules logiciels principaux, comme montré à la figure 2, parmi lesquels un module d'élaboration de stratégie de diffusion ESD mettant en oeuvre le procédé de diffusion selon l'invention.

Le **module d'élaboration de stratégie de diffusion ESD** utilise des données et informations présentées sous forme de pages en un langage de haut niveau XML (extensible Markup Language). A titre d'exemple, quelques pages sont décrites dans la suite de la description après la présentation d'objets essentiels manipulés et de règles de stratégie applicables, entre des balises de début et fin respectives. Le module d'élaboration de stratégie de diffusion ESD reçoit une requête d'expéditeur REX transmise par l'un des serveurs de service applicatif SSA sous un format compatible XML et produit une requête de multidiffusion RMD représentative d'une stratégie de diffusion finale, sous forme d'une page XML. Des éléments à diffuser constitutifs de la stratégie finale à utiliser sont situés au moins pour partie dans des fichiers XML séparés de la requête d'expéditeur REX et sont pour partie référencés dans la requête REX.

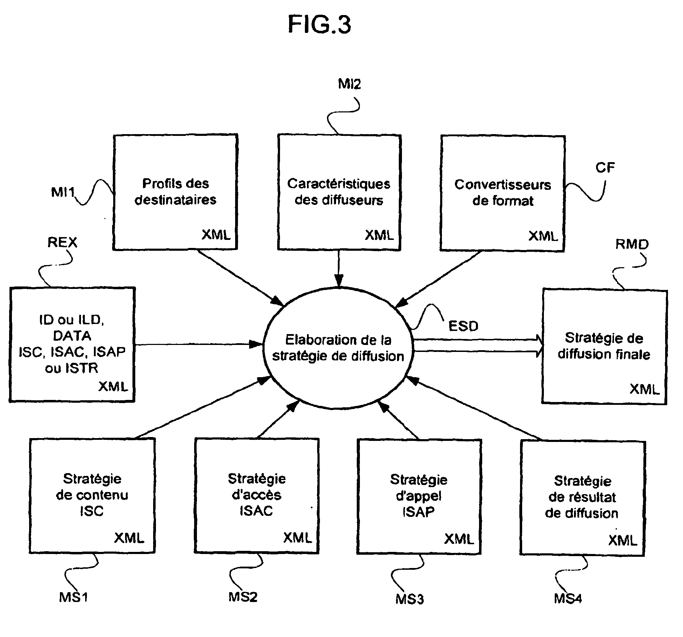

Pour établir une requête de multidiffusion RMD à transmettre de manière répartie vers des terminaux TD d'un ou de plusieurs destinataires identifiés explicitement ou implicitement dans la requête REX respectivement à travers des diffuseurs DF compatibles avec des données, le module ESD coopère essentiellement avec deux mémoires d'informations MI1 et MI2, un outil logiciel de convertisseurs de format CF et quatre modules de stratégie MS1 à MS4, comme montré à la figure 3.

Les informations extraites des mémoires d'informations MI1 et MI2, de l'outil logiciel MI3 et des quatre modules de stratégie MS1 à MS4 par le module d'élaboration sont présentées selon une réalisation préférée sous forme de pages XML traitées par le module d'élaboration ESD.

Le **format des données** est décrit de façon identique dans toutes les pages XML. Il est identifié par une balise <FORMAT>, qui inclut:
- le format proprement dit qui est le contenu de la balise <FORMAT> ;
- un attribut "type" qui est un complément au format précisant s'il s'agit d'un type MIME (Multipurpose Internet Mail Extensions) ou non ;
- un attribut "size" qui est une taille maximale en octets pouvant être prise en compte dans le format ;
- un attribut "transf" qui est une éventuelle règle de transformation à appliquer.

Plusieurs formats sont pris en compte dans une même requête REX, RMD si plusieurs documents ou données de nature différente sont à diffuser. Le format peut être un type MIME désigné par une valeur d'attribut type="mime" et consister en la description du type/sous-type et de caractéristiques additionnelles et d'un encodage. Le format peut être également un type défini par le nom et/ou l'extension de la donnée à diffuser et indiqué par une balise <NAME>. Les méta-caractères ? et * sont utilisables. Par exemple, le fichier toto.rtf est la donnée de nom "toto" et de format "*.rtf".

Les types possibles sont les suivants :
- mime : tout type MIME ;
- filename : tout type de donnée identifiée par son nom et/ou son extension.

En variante, d'autres types de format sont utilisables à condition qu'ils soient décrits à la fois dans le module de stratégie de contenu MS1 et dans la mémoire de caractéristiques de diffuseur MI2.

L'attribut "transf" est une référence à l'outil de convertisseurs défini par ailleurs, via une balise <TRANSF>. L'utilisation d'un convertisseur d'un format est décidée au niveau du module de stratégie de contenu MS1.

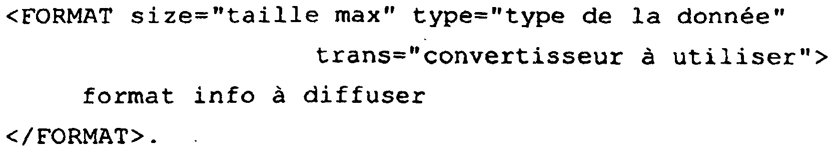

La **requête d'expéditeur REX** est construite par un serveur de service applicatif SSA sous un format compatible XML en introduisant les identificateurs et paramètres suivants de nature différente :
un identificateur de l'expéditeur qui a commandé la transmission de la requête REX dans le serveur SSA depuis son terminal TEX ; l'identificateur d'expéditeur non traité dans l'élaboration de la stratégie peut être utilisé notamment dans des contrôles d'accès de l'expéditeur à des terminaux TD définis par des destinataires ;
un identificateur de la requête non traité dans la phase d'élaboration de la stratégie ;
l'identificateur ID d'un destinataire, ou bien les identificateurs de destinataires, ou bien encore l'identificateur ILD d'une liste de destinataires ; l'identificateur ID de chaque destinataire peut être accompagné d'un profil de destinataire relatif à une liste d'identificateurs ITD de terminaux TD du destinataire ;
une donnée ou des données DATA à diffuser respectivement vers un ou des destinataires, avec des types de média TYME respectivement pour les données ;
le cas échéant des identificateurs ISC, ISAC, ISAP de l'une ou plusieurs de stratégies dites stratégie de contenu, stratégie d'accès et stratégie d'appel, pour chaque donnée afin de construire une stratégie finale de diffusion à appliquer, et/ou des paramètres à transmettre à des diffuseurs contribuant à définir en dépendance d'éléments traités par les modules de stratégie MS1 à MS4, comme on le verra plus loin, la stratégie de diffusion finale incluse dans la requête de multidiffusion vers le ou les destinataires, ou bien encore un identificateur ISTR d'une stratégie finale existante et mémorisée dans la plate-forme gestionnaire GMD ;
une déclaration éventuelle de convertisseurs de format disponibles.

Si les stratégies ne sont pas spécifiées dans la requête REX, l'une de stratégies pré-mémorisées est appliquée par défaut. L'expéditeur depuis le terminal appelant TEX ou le gestionnaire de service applicatif depuis le serveur SSA peut modifier seulement une information d'une stratégie déjà existante en la redéfinissant explicitement dans la requête REX.

Les objets essentiels manipulés dans le module d'élaboration de stratégie de diffusion ESD sont au nombre de 8 et des types suivants :
- donnée DATA à diffuser,
- destinataire, et liste de destinataires,
- terminal de destinataire TD,
- diffuseur DF,
- paramètres des diffuseurs,
- média (canal de transmission),
- convertisseur de format,
- plate-forme gestionnaire multidiffusion GMD.

Les règles de stratégie applicables sont au nombre de 4 respectivement traitées dans les modules de stratégie MS1 à MS4:
- stratégie de contenu,
- stratégie d'accès,
- stratégie d'appel,
- stratégie de résultat de diffusion.

Les **données à diffuser DATA** dans la requête d'expéditeur REX sont reçues sous forme de fichiers XML par la plate-forme GMD en entrée du module d'élaboration de stratégie de diffusion ESD. Des données à diffuser sont encadrées par une balise <DATA> et caractérisées par:
- leur nom : balise <NAME> ;
- le nom du fichier local contenant les données : balise <FILE> ;
- son format: balise <FORMAT>.

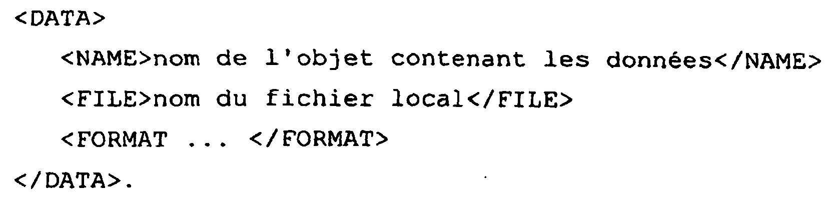

La **mémoire MI1** contient des profils de plusieurs destinataires regroupant chacun des caractéristiques de terminaux d'un destinataire respectif.

Le **profil d'un destinataire** associe à l'identificateur ID du destinataire la liste des identificateurs ITD des terminaux TD que le destinataire possède, avec pour chacun d'eux son adresse ATD et son type TYTD. Les caractéristiques du profil sont accessibles et modifiables par le destinataire. Un service applicatif peut définir les terminaux vers lesquels le destinataire veut diffuser dans la requête de multidiffusion RMD. Selon une autre variante, le service applicatif peut faire référence simplement au destinataire, le profil ayant été préalablement enregistré dans la mémoire MI1 via une requête spécifique.

Un destinataire est identifié par une balise <PROFILE>, et comprend :
- un identificateur unique ID : balise <DEST ID> ;
- un nom : balise <DEST NAME> ;
- un prénom : balise <DEST_FORNAME> ;
- la liste des identificateurs ITD des terminaux TD : balise <TERMINAL>, éventuellement avec des plages horaires de disponibilité définies ci-après par la balise <AVAILABILITY>.

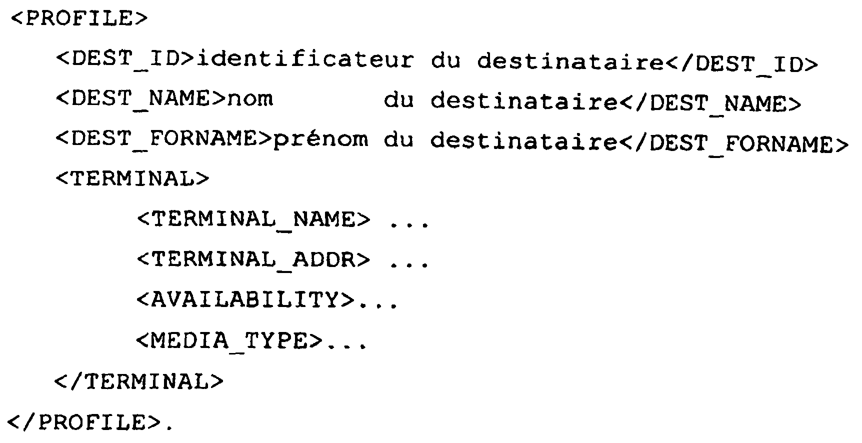

Lorsque des données dans une requête REX doivent être envoyées à plusieurs destinataires, la requête REX fait référence à l'identificateur ILD d'une liste prédéfinie de destinataires, au moyen d'une balise <PROFILE_LIST> comprenant un nom comme identificateur ILD : balise <NAME>, ou bien contient la liste exhaustive des destinataires.

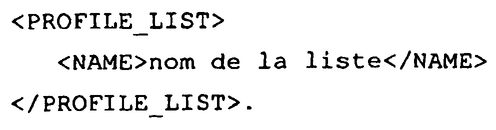

Les caractéristiques d'un **terminal de destinataire TD** sont définies par une balise <TERMINAL> et sont composées par les éléments suivants :
- son nom en tant qu'identificateur de terminal ITD : balise <TERMINAL_NAME> ;
- son adresse ATD : balise <TERMINAL_ADDR> ;
- sa ou ses plages horaires de disponibilité : balises <AVAILABILITY>, exprimées en heure et minute au format hhmm ;
- les types de média TYTD permettant d'accéder au terminal, définis par la balise précitée <MEDIA_TYPE>.

Une liste d'identificateurs de terminaux possédés par un destinataire est prédéfinie par le destinataire et pré-enregistrée dans la mémoire MI1. D'autres identificateurs de terminaux peuvent être ajoutés à la liste, mais ne seront exploitables que s'ils sont définis dans le profil du destinataire et dans les modules de stratégie d'accès et de stratégie d'appel MS2 et MS3, voire dans le module de stratégie de résultat de diffusion MS4.

Les terminaux pour un destinataire connus de la plate-forme GMD sont définis dans une balise <TERMINAL_NAME> et désignés chacun par une adresse qui peut être un numéro :
home : ligne téléphonique fixe du domicile ;
home2 : éventuellement 2^{ème} ligne téléphonique fixe du domicile ;
horne_voice_messaging : messagerie vocale de la 1^{ère} ligne fixe ;
home2_voice_messaging : messagerie vocale de la 2^{ème} ligne fixe ;
personnal_messaging : messagerie écrite personnelle ;
personal_mobile : radiotéléphone mobile personnel ;
personal_fax : télécopieur personnel ;
office : ligne téléphonique fixe professionnelle ;
office_voice_messaging : messagerie vocale professionnelle ;
professional_messaging : messagerie écrite professionnelle ;
professional_mobile: radiotéléphone mobile professionnel ;
professional_fax ; télécopieur professionnel.

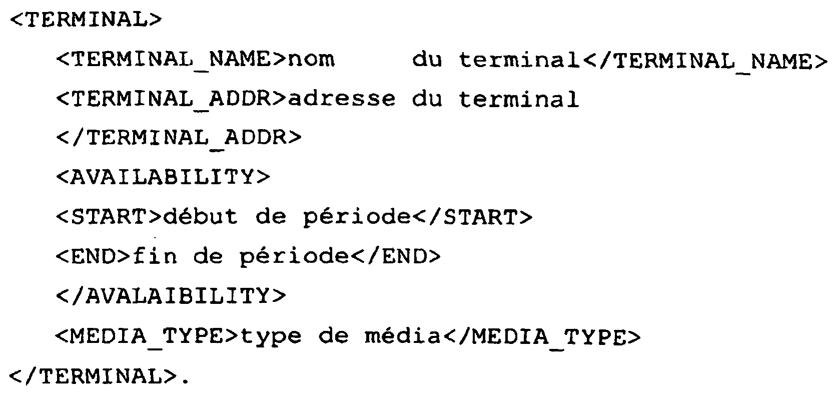

La **mémoire de caractéristiques de diffuseurs MI2** contient des caractéristiques et paramètres des diffuseurs DF qui sont accessibles à la plate-forme (SYSTEM) gestionnaire de multidiffusion GMD, et particulièrement des caractéristiques de médias supportés par les diffuseurs disponibles DF. Un diffuseur supporte un ou plusieurs médias, et plusieurs diffuseurs supportent un ou plusieurs médias communs.

La mémoire de diffuseurs MI2 est identifiée par une balise <SYSTEM_CAPABILITY>. Elle inclut la liste des diffuseurs disponibles, avec leurs caractéristiques et paramètres intrinsèques définies ci-dessous en relation avec une balise <TRANSMITTER>.

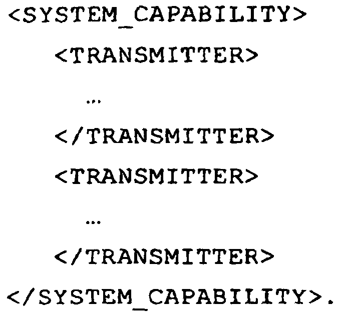

Chaque **média dans un diffuseur DF** est défini par une balise <MEDIA> et caractérisé par :
- son type TYDF: balise <MEDIA_TYPE> ;
- les types d'information que le média est capable de gérer : balises <FORMAT> définies ci-dessus.

Le type du média TYDF est défini par la balise <MEDIA_TYPE> et précise le média utilisé pour la diffusion des données depuis le diffuseur DF vers un terminal de destinataire TD ou la réponse depuis le terminal de destinataire. Les valeurs des types de média TYDF dans un diffuseur sont par exemple :
- tel : téléphone fixe ou mobile ;
- sms : messages courts ;
- fax : télécopie ;
- mail : messagerie écrite ;
- voicemail : messagerie vocale ;
- web : site web (serveur http).

D'autres types de média peuvent être considérés, sous réserve qu'ils soient déclarés dans les différentes stratégies appliquées et dans le profil de destinataire.

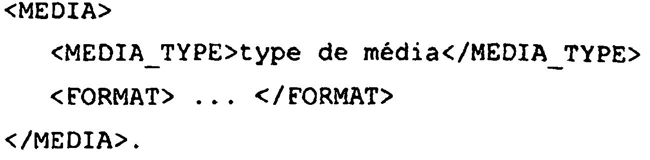

Des caractéristiques d'un diffuseur DF sont définies par une balise <TRANSMITTER> et sont composées par les éléments suivants :
- le nom du diffuseur en tant qu'identificateur IDF : balise <TRANSMITTER_NAME> ;
- l'adresse ADF du diffuseur : balise <TRANSMITTER_ADDR> ;
- la liste des médias TYDF que le diffuseur est capable de traiter : balises <MEDIA> définies ci-dessus ;
- un ou des scripts activés par la plate-forme gestionnaire de multidiffusion GMD et exécutés dans le diffuseur : balise <SCRIPT> ;
- le ou les objets contenant les paramètres passés au diffuseur lors de la demande de diffusion : balise <PARAM> ; ou
- un ou des fichiers locaux contenus dans un espace-mémoire de la plate-forme GMD et contenant les paramètres passés au diffuseur lors de la demande de diffusion : balise <PARAM_FILE>.

L'adresse <TRANSMITTER_ADDR> comprend un attribut type précisant le protocole d'accès au diffuseur, qui est par exemple le protocole "smtp" (Simple Mail Transport Protocol), ou "http" (HyperText Transfer Protocol).

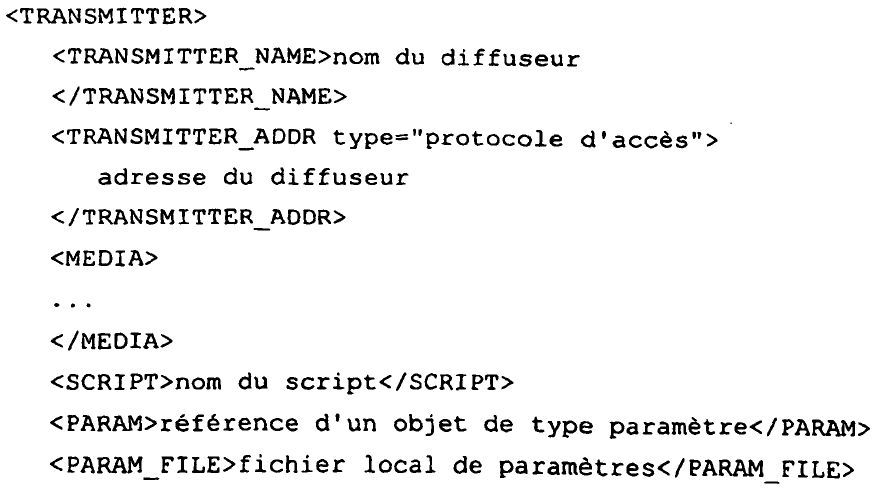

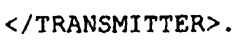

Le fichier de **paramètres des diffuseurs** est téléchargé dans la mémoire MI2 de la plate-forme gestionnaire de multidiffusion GMD. Le fichier est utilisé pour transmettre à un diffuseur DF ou au script activé lors de la diffusion, selon la réalisation du diffuseur, un ensemble de paramètres PDF relatifs au fonctionnement du diffuseur pour cette diffusion, à la gestion des interactions avec le ou les destinataires, ou toute autre spécificité liée au service applicatif.

Les Paramètres PDF des diffuseurs sont semblables aux données DATA à diffuser, mais sont destinés aux diffuseurs DF et non aux terminaux TD des destinataires. Les paramètres n'ont pas de format.

Les paramètres d'un diffuseur sont encadrés par une balise <PARAM> et caractérisés par :
- leur nom : balise <NAME> ;
- le nom du fichier local contenant les paramètres : balise <PARAM_FILE>.

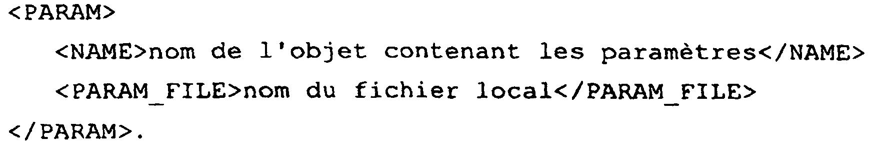

L'outil logiciel CF contient des caractéristiques de convertisseurs de format disponibles pour la plate-forme GMD.

Un **convertisseur de format** est externe au module d'élaboration de stratégie et modifie le format d'une donnée à diffuser. Chaque convertisseur est encapsulé dans un module logiciel particulier qui dialogue avec le module d'élaboration de stratégie ESD par le biais d'une interface spécifique. Le mécanisme d'appel est basé sur une requête HTTP contenant en paramètre des informations nécessaires au fonctionnement du convertisseur. Le résultat de la transformation est retourné dans le flux d'éléments traités par le module ESD.

Un convertisseur de format est défini par une balise <TRANSF> et contient les informations suivantes :
- son nom : balise <TRANSF NAME> ;
- son adresse : balise <TRANSF_URL> : l'adresse URL (Uniform Resource Locator) contient d'éventuels paramètres à passer au module logiciel de conversion ;
- ses formats en entrée : balises <FORMAT_IN> ;
- son format en sortie : balise <FORMAT OUT>.

Les formats en entrée et sortie sont définis de la même façon que le format des données (balise <FORMAT>), hormis les attributs "size" et "transf", qui ne sont pas utiles ici.

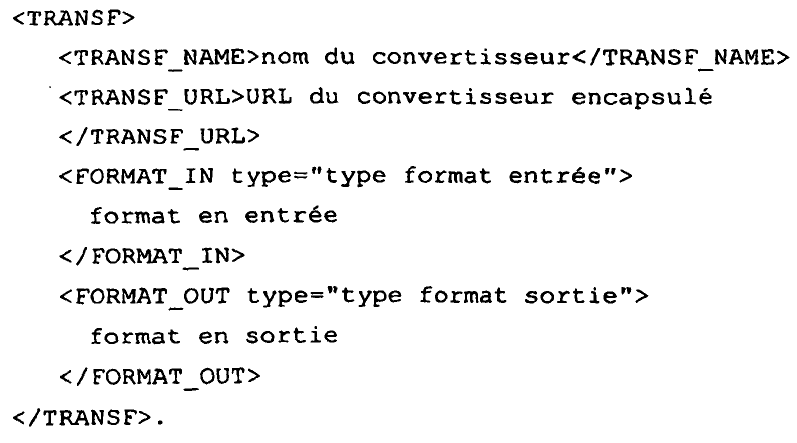

Le **module de stratégie de contenu MS1** contient une stratégie de contenu lue par le module d'élaboration ESD et indiquant le ou les types TYME de média utilisables pour la ou les données reçues DATA dans la requête d'expéditeur REX en fonction de l'analyse du format de la ou des données reçues afin de déterminer essentiellement les éléments de la requête de multidiffusion RMD à diffuser et les conversions de format à effectuer. La requête RMD spécifie plusieurs éléments à diffuser de natures différentes. Dans ce cas, le module ESD sélectionne dans la stratégie de contenu les éléments compatibles avec le terminal et le média qui seront utilisés pour appeler un destinataire des données. Ces éléments sont convertis dans un format approprié aux médias et terminaux TD utilisés.

La stratégie de contenu est identifiée par une balise XML <CONTENT_STRATEGY> et inclut les éléments suivants :
- un nom en tant qu'identificateur ISC : balise <NAME> ;
- une liste des médias traités et particulièrement des types de média TYME : balises <MEDIA>, avec pour chacun d'eux les formats de données gérés et les conversions de format éventuelles.

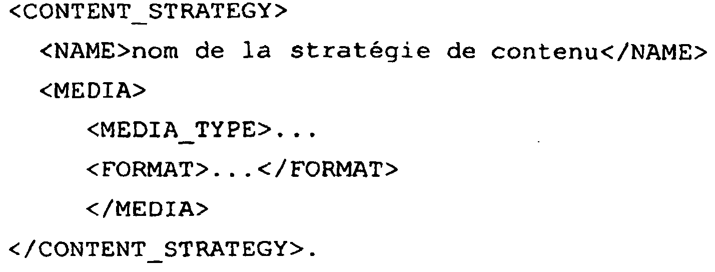

Le **module de stratégie d'accès MS2** contient une stratégie d'accès respective pour chaque couple composé d'un identificateur de destinataire ID éventuellement désigné via un identificateur de liste ILD et d'une donnée DATA à diffuser vers le destinataire identifié. La stratégie d'accès désigne au module ESD les identificateurs ITD des terminaux à utiliser pour la diffusion de la donnée, ainsi que la séquence ordonnant temporellement les appels des terminaux. Chaque destinataire a accès aux stratégies d'accès de ses terminaux dans le module MS2 pour les modifier.

Si une stratégie d'accès personnelle existe pour un destinataire identifié dans une requête REX, elle est utilisée en priorité par le module ESD ; dans le cas contraire, le module ESD utilise une stratégie par défaut pré-enregistrée dans le module MS2, par exemple une stratégie "urgent". L'enregistrement d'une stratégie d'accès par défaut implique l'enregistrement d'une liste de terminaux respective par défaut pour le destinataire.

Pour certaines applications, des identificateurs ITD de nouveaux terminaux non compris dans la liste précitée sont ajoutés lors de la définition d'une stratégie d'accès. Pour être utilisés, les identificateurs de ces terminaux doivent nécessairement être incorporés aussi dans la stratégie d'appel et le profil du destinataire.

La stratégie d'accès est identifiée par une balise <ACCESS_STRATEGY> et contient les éléments suivants :
- un nom en tant qu'identificateur ISAC : balise <NAME> ;
- l'identificateur ID du destinataire à qui elle s'applique : balise <DEST_ID> ;
- une suite de séquences d'appel définies par une balise <SEQUENCE> pour les ensembles de terminaux désignés des destinataires à appeler vers lesquels des données sont à transmettre respectivement ; toutes les séquences sont activées simultanément ; une séquence pour un destinataire est terminée lorsque l'un des terminaux spécifiés du destinataire a répondu à l'appel, ou lorsque toutes les tentatives d'appel de tous les terminaux de la séquence ont échoué :
- pour chaque séquence, la liste des terminaux désignés à appeler successivement depuis les diffuseurs respectivement associés aux terminaux, définie par des balises <TERMINAL>, et pour chaque terminal les plages horaires de disponibilité (balise <AVAILABILITY>) à comparer à des plages d'accessibilité lues dans le profil du destinataire dans la mémoire MI1, et éventuellement les types de média TYTD qui sont utilisables par les terminaux de la séquence et qui peuvent être par défaut tous les types disponibles.

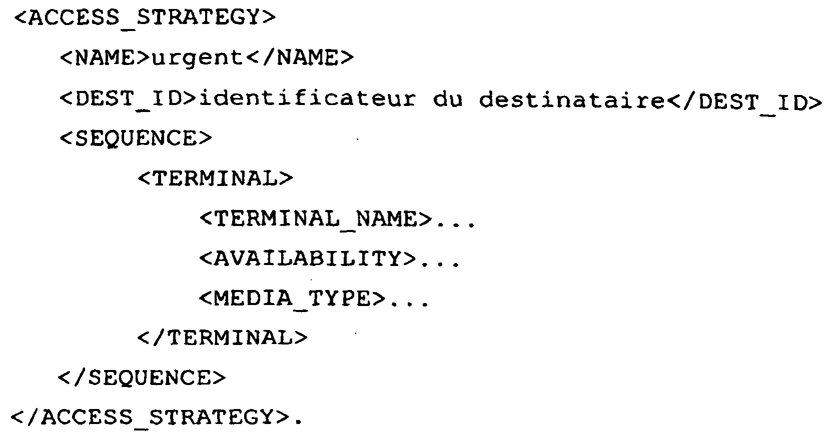

**Le module de stratégie d'appel MS3** contient des stratégies d'appel respectivement pour des couples de destinataire et de donnée.

Une statégie d'appel détermine des caractéristiques d'appel pour chacun des divers terminaux TD désignés par son identificateur ITD dans une stratégie d'accès pour chaque donnée reçue dans la requête REX. Les caractéristiques d'appel d'un terminal désigné, déterminées par la stratégie d'appel sont par exemple l'identificateur IDF d'un diffuseur DF et ayant un type de média TYDF compatible avec le type de média TYTD du terminal désigné et donc du type de média TYME pour la donnée DATA à diffuser vers ce terminal, un nombre et une fréquence de tentatives d'appel du terminal, une commande d'exécution de scripts distants dans le diffuseur, des plages horaires de disponibilité, etc.

La stratégie d'appel sélectionne le diffuseur à activer pour chaque terminal désigné. Les paramètres ou attributs applicables au terminal désigné sont fonction du média utilisé pour l'appeler. Les médias applicables à chaque terminal sont décrits dans le profil du destinataire.

La stratégie d'appel est identifiée par une balise <CALL_STRATEGY> et est composée des éléments suivants :
- un nom en tant qu'identificateur ISAP : balise <NAME> ;
- des objets de paramétrage des diffuseurs : balises <PARAM>, avec leurs noms et le fichier local contenant les paramètres ;
- une période de validité de la diffusion et/ou de la stratégie : balises <CALL_PERIOD> et <START>, <END> ; les dates sont exprimées soit en relatif par rapport à la date de réception de la requête (+h.mn), soit en absolu (année, mois, jour, heure, minute : aaaammjjhhmm) ;
- une liste de procédures d'appel pour chaque terminal : balises <TERMINAL_CALL> ;
pour chaque procédure d'appel:
- le terminal désigné concerné : balise <TERMINAL>, avec le type de média utilisé ;
- le diffuseur associé utilisé : balise <TRANSMITTER> ;
- le nombre de tentatives d'appel du terminal : balise <TRY> ;
- le temps d'attente entre deux tentatives d'appel successives : balise <WAIT> ; ce temps est exprimé en h.mn.

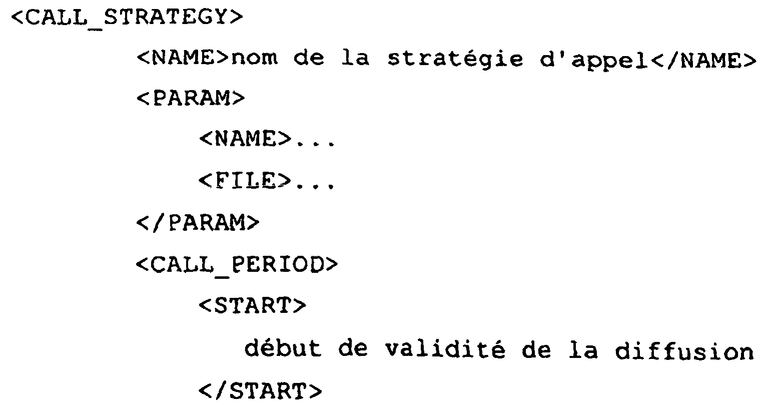

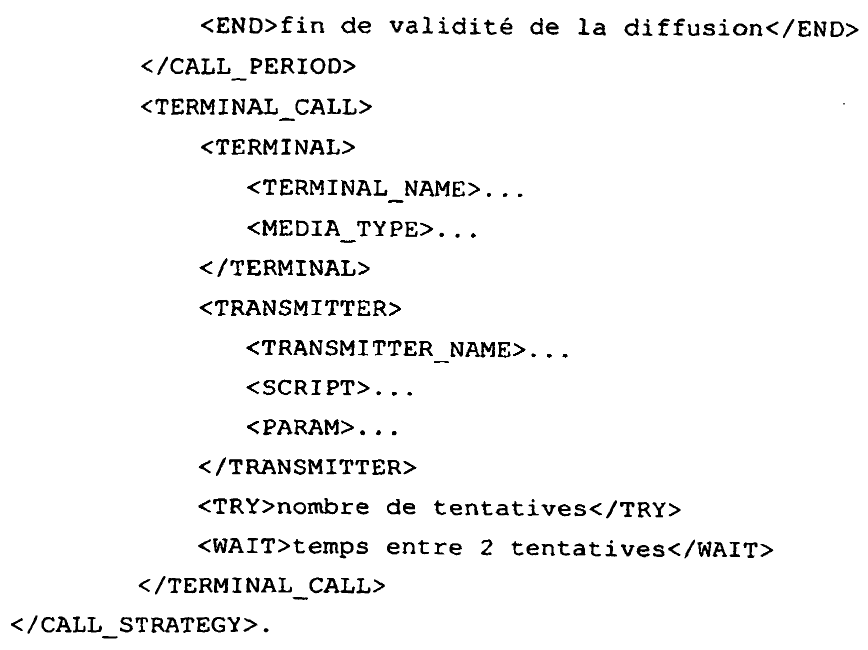

Le **module de stratégie de résultat MS4** contient un mécanisme dit stratégie de résultat qui spécifie l'agrégation et le traitement des résultats de la multidiffusion par la plate-forme gestionnaire de multidiffusion GMD.

Les résultats de chaque diffusion à un destinataire sont transmis par les diffuseurs DF au fur et à mesure des appels des terminaux du destinataire désignés par ou dans une requête REX à la plate-forme gestionnaire de multidiffusion par les diffuseurs, ce qui lui permet de gérer les séquences d'appel et de traiter les résultats de diffusion selon la stratégie de résultat. Un résultat reçu par la plate-forme GMD est constitué de trois informations par destinataire :
- un état du traitement de la requête de multidiffusion RMD par chaque diffuseur DF associé à un terminal désigné d'un destinataire identifié, précisant si le diffuseur a été appelé par la plate-forme GMD ; les valeurs possibles sont : "en attente", "en cours", "terminé" ;
- un état de la diffusion indiquant si un terminal désigné du destinataire a été appelé par le diffuseur associé et par conséquent si une donnée a été diffusée par le diffuseur au terminal désigné ; les valeurs possibles sont : "en attente", "non diffusé", "diffusé" ; l'état "non diffusé" est considéré comme un échec et conduit à la poursuite de la séquence d'appel par un appel du terminal désigné suivant dans la procédure d'appel du destinataire ; l'état "diffusé" est considéré comme la réussite de la diffusion de données à un terminal appelé du destinataire ayant par exemple retransmis un acquittement au diffuseur et provoque l'arrêt de la séquence ;
- une cause de la non-diffusion, dans le cas où l'état de la diffusion est "non diffusé" ; cette valeur est seulement stockée dans la module MS4.

Ces informations font l'objet d'un compte-rendu transmis par la plate-forme gestionnaire de multidiffusion GMD au serveur de service applicatif client SSA ayant transmis la requête REX, ou par d'autres voies à un ou plusieurs destinataires désignés dans la requête REX, en fin de diffusion, c'est-à-dire en fin de période de diffusion ou quand tous les destinataires ont été appelés ou au fur et à mesure des appels des destinataires.

La stratégie de résultat est identifiée par la balise <RESULT_STRATEGY> et comprend les éléments suivants :
- un nom : balise <NAME> ;
- des informations relatives à un mode d'envoi pour un bilan final de la diffusion : balise <FINAL>, avec un attribut "level" indiquant le niveau de détail souhaité. Deux niveaux de détails synthétique et détaillé sont possibles : "synthetic" et "detailed" ;
- des informations relatives à un mode d'envoi pour des résultats intermédiaires au fur et à mesure des appels des destinataires désignés : balise <INTERMEDIATE> ;
pour chacun de ces deux modes d'envoi de résultats
- la liste des destinataires à qui doivent être transmis les résultats : balise <PROFILE_LIST>,
- ou bien la suite des destinataires : balises <PROFILE>,
- la stratégie à appliquer pour cet envoi : balise <STRATEGY>, dans ce cas la notion de stratégie de résultat n'étant plus applicable,
- ou bien les différentes stratégies de contenu, d'accès et d'appel,
- les éventuels convertisseurs nécessaires : balises <TRANSF>.

Le résultat peut être transmis à des destinataires pour lesquels il n'existe pas de profil dans la mémoire Mil, par exemple le serveur de service applicatif ayant demandé l'élaboration de la requête de multidiffusion RMD. Dans ce cas, les champs à remplir sous la balise <PROFILE> sont ceux relatifs à l'adresse et au type de média de chacun des terminaux désignés d'un destinataire plutôt que relatifs au nom et au prénom du destinataire.

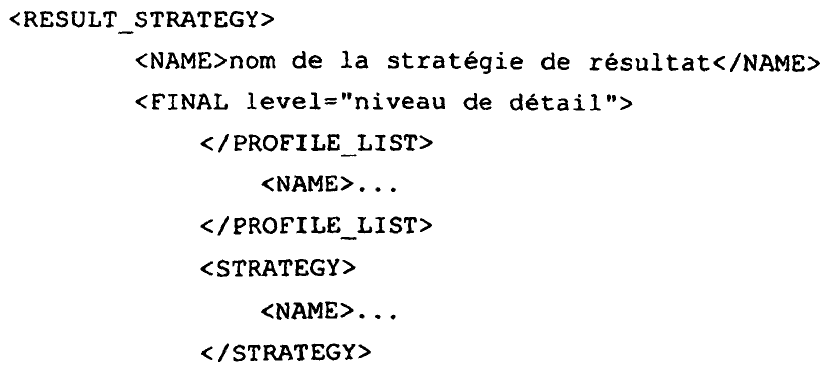

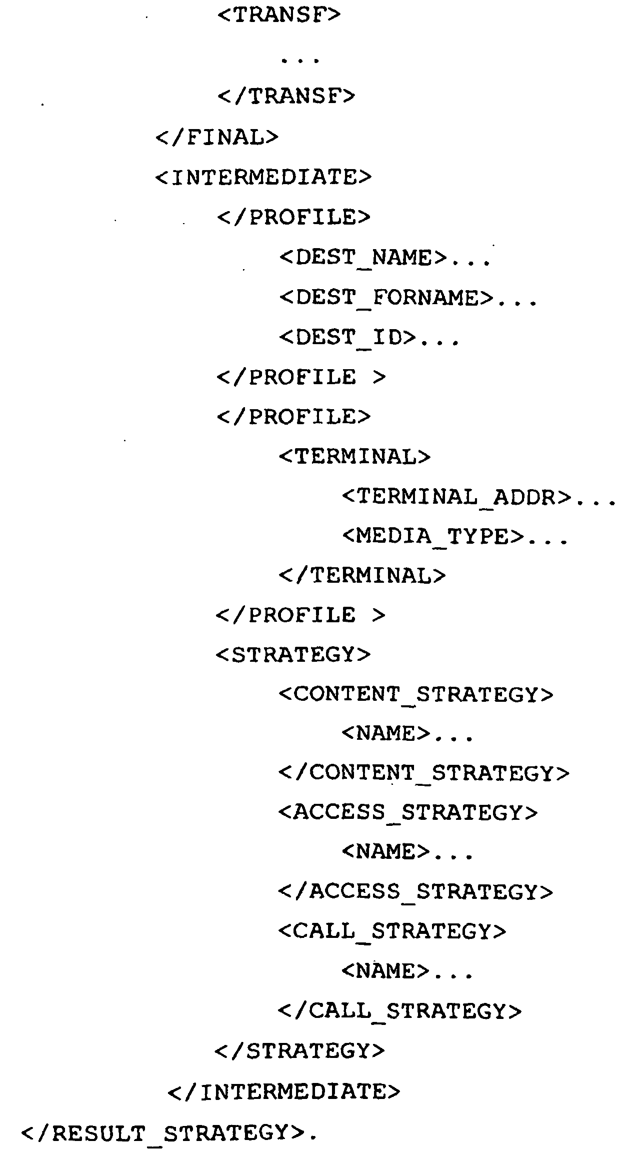

Par défaut, quatre stratégies "Urgent", "Normal", "Info" et "Result" de chaque type contenu, accès et appel, ainsi que trois stratégies de résultat "Urgent", "Normal" et "Info" sont respectivement pré-enregistrées dans les modules MS1, MS2, MS3 et MS4. Toutes ces stratégies sont prédéterminées et éventuellement modifiables par paramétrage dans la plate-forme GMD. Elles ne sont pas modifiables par un serveur de service applicatif SSA. Tout serveur de service applicatif SSA expéditeur d'une requête REX définit une stratégie qui lui est propre si celles qui sont prédeterminées ne lui conviennent pas.

Plus généralement dans un module supplémentaire non représenté est prévue une stratégie dite globale ISTR qui englobe les différentes stratégies précitées de contenu, d'accès, d'appel, et de résultat et qui est identifiée par une balise XML <STRATEGY>:

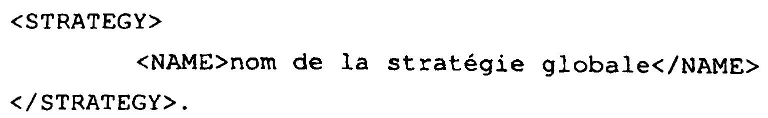

La **stratégie finale de diffusion** est issue du traitement des éléments présentés dans les stratégies de contenu, d'accès et d'appel. La stratégie finale de diffusion figure de préférence telle quelle dans la **requête de multidiffusion RMD** et est écrite dans le module MS4.

La stratégie de diffusion est identifiée par une balise <FINAL_STRATEGY> et contient les éléments suivants :
- un identificateur unique : balise <ID> ;
- une suite de séquences d'appel à exécuter pour les destinataires désignés dans la requête reçue REX : balises <SEQUENCE>, avec pour chacune d'entr'elles la liste des appels des terminaux du destinataire respectif à réaliser : balises <CALL> ;
pour chaque séquence d'appel et donc chaque destinataire :
- les caractéristiques de chaque terminal désigné à appeler : balise <TERMINAL>, et en outre le type de média adéquat TYTD,
- les caractéristiques du diffuseur DF à utiliser pour transmettre les données au terminal désigné à appeler : balise <TRANSMITTER>, et le cas échéant le script à activer dans le diffuseur et le fichier de paramètres du diffuseur à utiliser,
- la donnée DATA à diffuser, convertie le cas échéant au format adéquat : balise <DATA>,
- des informations d'horodatage incluant la date et l'heure de chaque tentative d'appel : balise <TIME>.

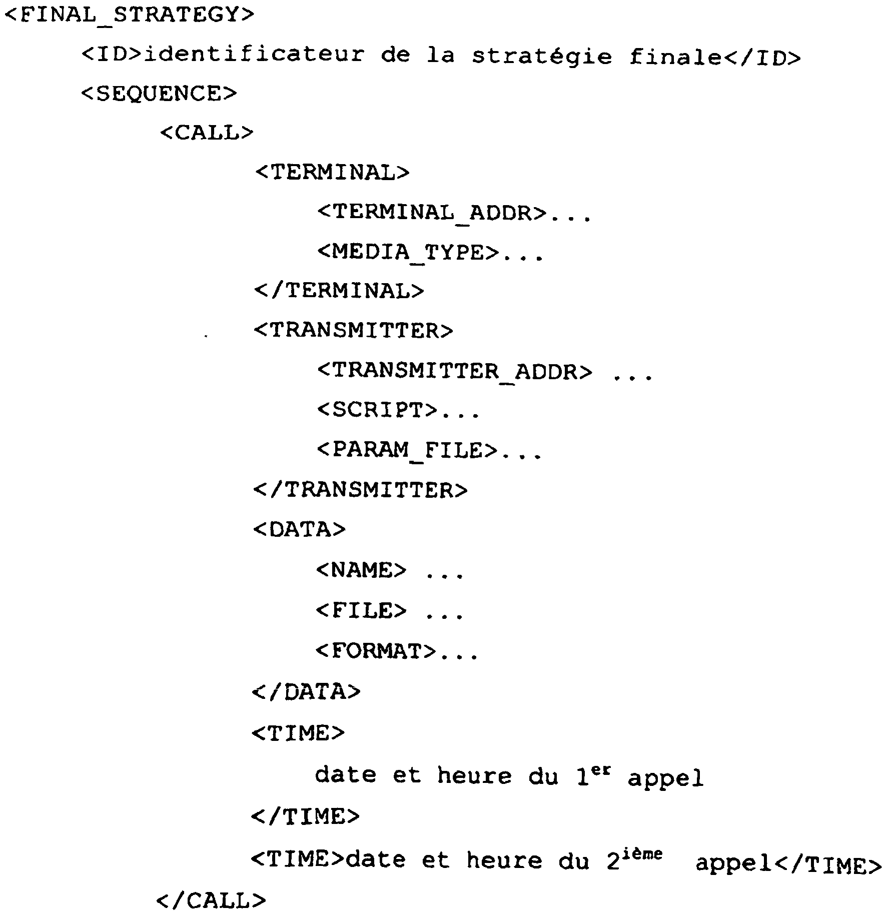

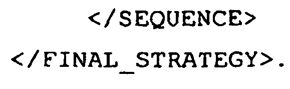

L'utilisation du format XML pour la description de toutes les informations, tous les objets manipulés et toutes les stratégies applicables rend aisé et homogène leur traitement pour l'élaboration de la stratégie finale dans le module ESD. De plus, le système à balises ainsi créé est évolutif, et l'ajout de propriétés aux différents objets/éléments manipulés est facilité.

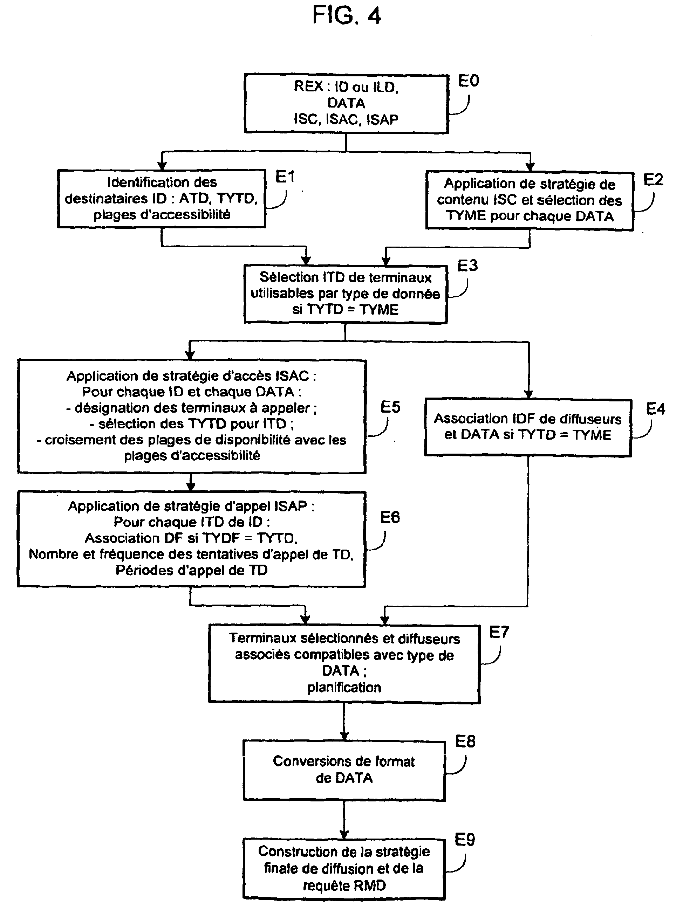

Pour **diffuser plusieurs données** DATA depuis un terminal d'expéditeur TEX respectivement **vers plusieurs destinataires** ayant chacun plusieurs terminaux à travers des diffuseurs DF en réponse à une requête d'expéditeur REX transmise par un serveur de service applicatif SSA et contenant les données transmises par le terminal d'expéditeur et les identificateurs ID des destinataires des données, le procédé de l'invention comprend des étapes E0 à E9 montrées à la figure 4 pour construire une stratégie de diffusion finale à incorporer dans une requête de multidiffusion RMD, ou d'une manière analogue une stratégie de résultat.

Initialement, après mémorisation de la requête reçue REX, la plate-forme gestionnaire de multidiffusion GMD contrôle les droits d'accès de l'expéditeur avant de construire la stratégie de diffusion finale, puis enregistre les données DATA sous forme de fichiers XML, à l'étape E0.

A l'étape E1, le module d'élaboration de la stratégie de diffusion ESD extrait de la requête REX les identificateurs ID des destinataires, ou bien l'identificateur ILD d'une liste de destinataires, afin de rechercher les identificateurs correspondants ID dans la mémoire MI1. Dans les deux cas, le module ESD récupère de la mémoire MS1 les profils des destinataires identifiées par les identificateurs ID. En particulier, le profil de chaque destinataire contient les caractéristiques des terminaux TD du destinataire telles que leurs identificateurs ITD, leurs adresses ATD, leurs types de média TYTD et leurs plages de disponibilité.

Si des éléments sont présents explicitement dans la requête REX, ils prévalent sur tout autre élément.

Le module ESD récupère ensuite les identificateurs existants ISC des stratégies de contenu associées respectivement aux données reçues DATA et inclus dans la requête REX, à l'étape E2. Le module ESD lit dans le module MS1 le ou les types de média TYME qui sont déterminés en correspondance avec les identificateurs ISC et qui seront utilisés respectivement pour les données à diffuser DATA.

L'étape E2 permet également d'appliquer les conversions de format le cas échéant.

Puis le module ESD compare les types de média TYTD pour les terminaux des destinataires aux types de média (TYME pour les données reçues destinées respectivement aux destinataires, à l'étape E3. Seuls les identificateurs ITD des terminaux ayant au moins un type de média TYTD compatible, par exemple identique au type de média TYME pour une donnée sont sélectionnés pour recevoir cette donnée. Les identificateurs des terminaux incompatibles avec des données à diffuser pour chaque destinataire sont rejetés.

A l'étape E4, le module ESD recherche dans la mémoire de diffuseurs MI2 les identificateurs IDF de diffuseurs présentant un type de média TYDF compatible avec un type de média TYME pour une donnée. Le module ESD associe à cette donnée les identificateurs des diffuseurs potentiels compatibles, comme précédemment les identificateurs ITD des terminaux compatibles.

Ainsi à chaque donnée sont associés les identificateurs IDF des diffuseurs compatibles et les caractéristiques de ceux-ci tels que notamment leurs adresses ADF, les types TYDF des médias d'accès et les objets ou fichiers de paramètres de diffuseur ainsi que des transformations à appliquer.

Aux étapes E5 et E6, le module ESD extrait des identificateurs de stratégie d'accès et de stratégie d'appel ISAC et ISAP dans la requête REX, s'ils existent. Si les identificateurs ISAC et ISAP sont absents dans la requête REX, le module ESD recherche ces identificateurs en correspondance avec les identificateurs ID des destinataires identifiés à l'étape E1, dans les modules MS2 et MS3 ; sinon, le module ESD applique des stratégies d'accès et d'appel par défaut, typiquement par défaut "Normal".

A l'étape E5, pour chaque couple de destinataire identifié et chaque donnée DATA à diffuser vers ce destinataire, le module ESD désigne les identificateurs ITD des terminaux à appeler selon la stratégie d'accès identifiée ISAC parmi ceux retenus à l'étape E3 pour la donnée à diffuser. Les caractéristiques des terminaux sélectionnés, telles que type de média TYTD et plage de disponibilité lues à l'étape E1, sont respectivement comparées au type de média et à la plage d'accessibilité du destinataire selon la stratégie d'accès ISAC identifiée dans le module MS2 afin que la donnée ne soit diffusée à un terminal désigné compatible que pendant des parties communes à la plage de disponibilité et la plage d'accessibilité.

La stratégie d'accès contient pour la donnée à diffuser une séquence d'appel à introduire dans la requête de multidiffusion pour appeler successivement les terminaux désignés du destinataire depuis les moyens de diffusion associés respectivement.

Puis à l'étape E6, le module ESD associe à l'identificateur ITD de chaque terminal désigné TD du destinataire, l'identificateur IDF d'un diffuseur DF ayant un type de média TYDF compatible avec le type de média TYTD du terminal, et lit les caractéristiques du diffuseur associé, telles que scripts et/ou fichier de paramètres dans la mémoire MI2. En fonction de la stratégie d'appel selon l'identificateur ISAP, le module ESD planifie les procédures d'appel du terminal désigné par le diffuseur associé, en particulier le nombre de tentatives d'appel et leur fréquence ou temps d'attente entre deux tentatives, et les périodes d'appel du terminal issues de l'intersection temporelle entre la période de validité de la stratégie d'appel et de l'intersection temporelle des plages de disponibilité et des plages d'accessibilité déterminée à l'étape précédente E5. Les caractéristiques précédentes comprises dans la stratégie d'appel seront introduites dans la requête de multidiffusion RMD.

A l'étape suivante E7, le module ESD agrège les informations issues des étapes précédentes E4, E5 et E6. Il détermine en particulier les terminaux désignés de chaque destinataire qui sont à appeler pour recevoir une donnée destinée au destinataire et donc les terminaux compatibles par type de média TYME pour les données, et les diffuseurs associés aux terminaux désignés. Le module ESD planifie également les tentatives d'appel de terminaux pour chaque diffuseur associé.

A l'étape E8, des conversions de format sont lues via l'outil logiciel CF par le module ESD pour mettre à des formats adéquats respectivement les données DATA à diffuser, lorsqu'une conversion de format est requise dans la stratégie de contenu identifiée. Les diffuseurs finalement retenus et les règles à appliquer étant connus, les conversions peuvent sont alors effectuées pour la diffusion.

A l'étape finale E9, le module ESD élabore un fichier de stratégie finale au format XML en fonction des éléments issus des étapes précédentes. Une interface d'adaptation de protocole (figure 2) dans la plate-forme GMD partage la requête de multidiffusion RMD en diverses requêtes dirigées respectivement vers les diffuseurs DF et contenant chacune les séquences d'appel des terminaux désignés respectifs devant recevoir une donnée via le diffuseur associé.

Dans le cas de la stratégie de résultat, le module MS4 mémorise ces informations pour les utiliser au fur et à mesure de la réception des résultats de diffusion transmis par les diffuseurs.

Selon un **exemple pratique,** les pages XML des objets essentiels manipulés et de règles de stratégie applicables sont définies ci-après à la suite d'une requête REX émise par un serveur SSA. L'expéditeur demande l'envoi d'un document de données DATA "fete_fin_annee.doc" à un ami Richard Durand. Cet ami est équipé d'une messagerie écrite professionnelle et d'un téléphone à son domicile. L'expéditeur souhaite que le document soit enregistré dans la messagerie écrite professionnelle de l'ami destinataire, et qu'un message vocal indiquant l'objet du document parvienne au téléphone du domicile de l'ami destinataire ; on considère que si l'ami destinataire n'est pas à son domicile, sa messagerie vocale personnelle prendra en charge l'enregistrement du message.

Aucune interaction n'est demandée avec le destinataire. Le résultat est disponible dans la plate-forme gestionnaire de multidiffusion GMD et retransmis au serveur précité SSA par la plate-forme GMD.

Les pages XML utilisées par le module d'élaboration de stratégie ESD selon cet exemple sont les suivantes.

### Requête d'expéditeur REX :

<REQUEST type="send_msg">
<APP_ID>appli_test</APP_ID>
<APP_KEY>123456</APP_KEY>
<DATA>
<NAME>msg_title</NAME>
<FILE>/tmp/125z8456 title</FILE>
<FORMAT type="filename">msg_title</FORMAT>
</DATA>
<DATA>
<NAME>fete_fin_annee.doc</NAME>
<FILE>/tmp/125z8456_fete_fin_annee.doc</FILE>
<FORMAT type="filename">*.doc</FORMAT>
</DATA>
<PARAM>
<NAME>Test_diffusoo</NAME>
<FILE>/tmp/125z8456_test_appel.prm</FILE>
</PARAM>
<PROFILE_LIST>
<PROFILE>
<DEST_NAME>Durand</DEST_NAME>
<DEST_FORNAME>Richard</DEST FORNAME>
<DEST_ID>123456</DEST_ID>
</PROFILE>
</PROFILE_LIST>
<STRATEGY>
<CONTENT_STRATEGY>
<NAME>Test_contenu</NAME>
</CONTENT_STRATEGY>
<CALL_STRATEGY>
<NAME>Test_appel</NAME>
</CALL_STRATEGY>
<ACCESS_STRATEGY>
<NAME>Test_acces</TEST>
</ACCESS STRATEGY>
<RESULT_STRATEGY>
<NAME>Test_resultat</NAME>
</RESULT_STRATEGY>
</STRATEGY>
<TRANSF>
<TRANSF_NAME>txt2wavlin</TRANSF_NAME>
<TRANSF_URL>
http://tts.cgi?out=lin&hz=16000
</TRANSF_URL>
<FORMAT_IN type="filename">msg_title
</FORMAT_IN>
<FORMAT_IN type="filename">*.txt</FORMAT_IN>
<FORMAT_IN type="mime">
Content_Type:Text/plain;
charset:iso-8852-1
</FORMAT_IN>
<FORMAT_OUT type="filname">*.wav</FORMAT_OUT>
</TRANSF>
</REQUEST>.

### Profil du destinataire Richard Durand :

<PROFILE>
<DEST_ID>test0123456</DEST_ID>
<DEST NAME>Durand</DEST NAME>
<DEST_FORNAME>Richard</DEST_FORNAME>
<TERMINAL>
<TERMINAL_NAME>home</TERMINAL_NAME>
<TERMINAL_ADDR>0145786602</TERMINAL_ADDR>
<MEDIA_TYPE>tel</MEDIA_TYPE>
</TERMINAL>
<TERMINAL>
<TERMINAL_NAME>professional_messaging</TERMINAL_NAME> <TERMINAL_ ADDR>durand@wanadoo.fr</TERMINAL_ADDR>
<MEDIA_TYPE>mail/MEDIA_TYPE>
</TERMINAL>
</PROFILE>.

### Diffuseurs DF accessibles à la plate-forme GMD

<SYSTEM_CAPABILITY>
<TRANSMITTER>
<TRANSMITTER_NAME>Diffusoo</TRANSMITTER_NAME>
<TRANSMITTER_ADDR type="Smtp">
diffusoo@wanadoo.fr
</TRANSMITTER_ADDR>
<MEDIA>
<MEDIA_TYPE>mail</MEDIA_TYPE>
<FORMAT size=10000000 type="filename">*</FORMAT>
</MEDIA>
<MEDIA>
<MEDIA_TYPE>tel</MEDIA_TYPE>
<FORMAT type="filename">*.wav</FORMAT>
<FORMAT type="filename">*.txt</FORMAT>
<FORMAT type="mime">
Content_Type:audio/basic
</FORMAT>
</MEDIA>
</TRANSMITTER>
</SYSTEM_CAPABILITY>.

### Stratégie de contenu :

<CONTENT_STRATEGY>
<NAME>Test_contenu</NAME>
<MEDIA>
<MEDIA_TYPE>mail</MEDIA_TYPE>
<FORMAT type="filename">*.doc</FORMAT>
</MEDIA>
<MEDIA>
<MEDIA_TYPE>tel</MEDIA TYPE>
<FORMAT type="filename">*.wav</FORMAT>
<FORMAT type="filename" transf="txt2wavlin">
msg_title
</FORMAT>
</MEDIA>
</CONTENT_STRATEGY>.

### Stratégie d'accès :

<ACCESS_STRATEGY>
<NAME>Test_acces</TEST>
<SEQUENCE>
<TERMINAL>
<TERMINAL_NAME>home</TERMINAL_NAME>
<AVAILABILITY>
<START>0700</START>
<END>0830</END>
</AVAILABILITY>
<AVAILABILITY>
<START>1900</START>
<END>2300</END>
</AVAILABILITY>
</TERMINAL>
</SEQUENCE>
<TERMINAL>
<TERMINAL_NAME>
professional_messaging
</TERMINAL_NAME>
</TERMINAL>
</SEQUENCE>
</ACCESS_STRATEGY>.

### Stratégie d'appel :

<CALL_STRATEGY>
<NAME>Test_appel</NAME>
<CALL_PERIQD>
<START>+0.0</START>
<END>+24.00</END>
</CALL_PERIOD>
<TERMINAL_CALL>
<TERMINAL>
<TERMINAL_NAME>home</TERMINAL_NAME>
<MEDIA_TYPE>tel</MEDIA_TYPE>
</TERMINAL>
<TRANSMITTER>
<TRANSMITTER_NAME>Diffusoo</TRANSMITTER_NAME>
<SCRIPT>notif.exe</SCRIPT>
<PARAM>Test_diffusoo</PARAM>
</TRANSMITTER>
<TRY>3</TRY>
<WAIT>0.30</WAIT>
</TERMINAL_CALL>
<TERMINAL_CALL>
<TERMINAL>
<TERMINAL_NAME>
professional_Messaging
</TERMINAL_NAME>
<MEDIA TYPE>mail</MEDIA TYPE>
</TERMINAL>
<TRANSMITTER>
<TRANSMITTER_NAME>Diffusoo</TRANSMITTER_NAME>
<PARAM_FILE>/tmp/98827Test_diff.prm</PARAM_FILE>
</TRANSMITTER>
<TRY>1</TRY>
</TERMINAL_CALL>
</CALL_STRATEGY>.

### Stratégie de résultat de diffusion :

<RESULT_STRATEGY>
<NAME>Test_resultat</NAME>
<FINAL level=synthetic">
<PROFILE>
<TERMINAL>
<TERMINAL ADDR>
http://www.test.fr/result.cgi
</TERMINAL_ADDR>
<MEDIA>
<MEDIA_TYPE>web</MEDIA _TYPE>
</MEDIA>
</TERMINAL>
</PROFILE>
</FINAL>
</RESULT_STRATEGY>.

### Stratégie de diffusion finale :

<FINAL_STRATEGY>
<ID>T089765769</ID>
<SEQUENCE>
<CALL>
<TERMINAL>
<TERMINAL_ADDR>0145786602</TERMINAL_ADDR>
<MEDIA_TYPE>tel</MEDIA_TYPE>
</TERMINAL>
<TRANSMITTER>
<TRANSMITTER_ADDR type="smtp">
diffusoo@wanadoo.fr
</TRANSMITTER_ADDR>
<SCRIPT>notif.exe</SCRIPT>
<PARAM FILE>
/tmp/125z8456_test_appel.prm
</PARAM_FILE>
</TRANSMITTER>
<DATA>
<NAME>msg_title</NAME>
<FILE>/tmp/125z8456_title.wav</FILE>
<FORMAT type="filename">*.wav</FORMAT>
</DATA>
<TIME>200112011900</TIME>
<TIME>200112011930</TIME>
<TIME>200112012000</TIME>
</CALL>
</SEQUENCE>
<SEQUENCE>
<CALL>
<TERMINAL>
<TERMINAL ADDR>
durand@wanadoo.fr
</TERMINAL_ADDR>
<MEDIA_TYPE>mail</MEDIA_TYPE>
</TERMINAL>
<TRANSMITTER>
<TRANSMITTER_ADDR type="smtp">
diffusoo@wanadoo.fr
</TRANSMITTER_ADDR>
<PARAM FILE>
/tmp/98827Test_diff.prm
</PARAM_FILE>
</TRANSMITTER>
<DATA>
<NAME>fete_fin_annee.doc</NAME>
<FILE>/tmp/125z8456_fete_fin_annee.doc</FILE>
<FORMAT type="filename">*.doc</FORMAT>
</DATA>
<TIME>200112011607</TIME>
</CALL>
</SEQUENCE>
</FINAL_STRATEGY>.

Bien que l'invention ait été décrite en référence au langage XML, celle-ci peut être mise en oeuvre avec tout autre langage de programmation, indépendamment de toute plate-forme matérielle. Le procédé de l'invention est donc facilement portable, surtout s'il est supporté par un langage de haut niveau orienté objet à programmation distribuée comme le langage Java.

## Revendications

1. Procédé pour diffuser une donnée (DATA) vers des terminaux (TD) d'un destinataire à travers des moyens de diffusion (DF) en réponse à une requête d'expéditeur (REX) contenant la donnée et un identificateur (ID) du destinataire, des identificateurs (TTD) et des caractéristiques des terminaux du destinataire étant recherchés (E1) en correspondance avec l'identificateur du destinataire (ID) dans une première mémoire (MI1), **caractérisé par** les étapes suivantes :
- détermination (E2) pour la donnée de types de média (TYME) à travers lesquels la donnée est à transmettre aux terminaux (TD) du destinataire,
- sélection (E3) des identificateurs des terminaux du destinataire ayant des types de média (TYTD) à travers lesquels les terminaux de destinataire sont susceptibles de recevoir la donnée et qui sont compatibles avec l'un des types de média (TYME) pour la donnée (DATA),
- sélection (E4) dans une deuxième mémoire (MI2) des identificateurs (IDF) et de caractéristiques de moyens de diffusion (DF) ayant chacun un type de média (TYDF) compatible avec au moins l'un des types de média (TYME) pour la donnée (DATA),
- association (E7) de l'identificateur (ITD) de chacun des terminaux sélectionnés (TD) à l'identificateur (IDF) d'un moyen de diffusion sélectionné (DF) ayant un type de média (TYDF) compatible avec celui (TYTD) du terminal, et
- établissement (E9) d'une requête de multidiffusion (RMD) comprenant au moins une séquence d'appel pour appeler les terminaux sélectionnés du destinataire respectivement depuis les moyens de diffusion associés, la séquence d'appel contenant les caractéristiques de chaque terminal sélectionné à appeler, les caractéristiques du moyen de diffusion associé à chaque terminal sélectionné et la donnée à diffuser.

2. Procédé conforme à la revendication 1, selon lequel les types de média (TYME) pour la donnée sont déterminés selon une stratégie de contenu (ISC) identifiée dans la requête d'expéditeur (REX).

3. Procédé conforme à la revendication 1 ou 2, comprenant une désignation (E5) d'identificateurs de terminaux sélectionnés (ITD) selon une stratégie d'accès (ISAC) identifiée dans la requête d'expédition (REX) ou par défaut pour le destinataire et la donnée.

4. Procédé conforme à la revendication 3, selon lequel les caractéristiques d'un terminal dont l'identificateur (ITD) est désigné contient une plage de disponibilité qui est comparée à une plage d'accessibilité du destinataire selon la stratégie d'accès identifiée afin que la donnée ne soit diffusée au terminal que pendant des parties communes aux plages.

5. Procédé conforme à la revendication 3 ou 4, selon lequel la stratégie d'accès (ISAC) contient la séquence d'appel à introduire . dans la requête de multidiffusion (RMD) pour appeler successivement les terminaux sélectionnés du destinataire dont les identificateurs sont désignés depuis les moyens de diffusion associés respectivement.

6. Procédé conforme à l'une quelconque des revendications 3 à 5, selon lequel l'association (E6) de l'identificateur désigné (ITD) d'un terminal selectionné à l'identificateur (IDF) d'un moyen de diffusion (DF) ayant un type de média (TYDF) compatible avec celui (TYTD) du terminal sélectionné est déterminée par une stratégie d'appel (ISAP) identifiée dans la requête d'expéditeur (REX) ou par défaut pour le destinataire et la donnée.

7. Procédé conforme à la revendication 6, selon lequel la stratégie d'appel (ISAP) comprend un nombre et une fréquence de tentatives d'appel de chaque terminal dont l'identificateur est désigné et des périodes d'appel de chaque terminal, à introduire dans la requête de multidiffusion (RMD).

8. Procédé conforme à l'une quelconque des revendications 1 à 7, comprenant une conversion de format (E8) de la donnée avant l'établissement de la requête de multidiffusion (RMD).

9. Procédé conforme à l'une quelconque des revendications 1 à 8, selon lequel la donnée est diffusée vers plusieurs destinataires ayant chacun des terminaux respectifs, la requête d'expéditeur (REX) contient en outre des identificateurs (ID) des destinataires ou l'identificateur d'une liste des destinataires identifiables dans la première mémoire (MI1), et la requête de multidiffusion (RMD) contient en outre plusieurs séquences d'appel de terminaux sélectionnés respectivement pour les destinataires.

10. Procédé conforme à la revendication 9, selon lequel plusieurs données sont diffusées respectivement vers les destinataires, la séquence d'appel pour un destinataire dans la requête de multidiffusion (RMD) contenant en outre la donnée à diffuser vers les terminaux sélectionnés du destinataire.

11. Procédé conforme à l'une quelconque des revendications 1 à 10, utilisant le langage de programmation XML.

12. Plate-forme (GMD) pour diffuser une donnée (DATA) vers des terminaux (TD) d'un destinataire à travers des moyens de diffusion (DF) en réponse à une requête d'expéditeur (REX) contenant la donnée et un identificateur (ID) du destinataire, des identificateurs (ITD) et des caractéristiques des terminaux du destinataire étant recherchés (E1) en correspondance avec l'identificateur du destinataire (ID) dans une première mémoire (MI1) de la plate-forme **caractérisée en ce qu'**elle comprend:
- un moyen (ESD, MS1) pour déterminer pour la donnée des types de média (TYME) à travers lesquels la donnée est à transmettre aux terminaux (TD) du destinataire,
- un moyen (ESD) pour sélectionner des identificateurs des terminaux du destinataire ayant des types de média (TYTD) à travers lesquels les terminaux de destinataire sont susceptibles de recevoir la donnée et qui sont compatibles avec l'un des types de média (TYME) pour la donnée (DATA),
- un moyen (ESD) pour sélectionner dans une deuxième mémoire (MI2) de la plate-forme, des identificateurs (IDF) et de caractéristiques de moyens de diffusion (DF) ayant chacun un type de média (TYDF) compatible avec au moins l'un des types de média (TYME) pour la donnée (DATA),
- un moyen (ESD) pour associer l'identificateur (ITD) de chacun des terminaux sélectionnés (TD) à l'identificateur (IDF) d'un moyen de diffusion sélectionné (DF) ayant un type de média (TYDF) compatible avec celui (TYTD) du terminal, et
- un moyen (ESD) pour établir une requête de multidiffusion (RMD) comprenant au moins une séquence d'appel pour appeler les terminaux sélectionnés du destinataire respectivement depuis les moyens de diffusion associés, la séquence d'appel contenant les caractéristiques de chaque terminal sélectionné à appeler, les caractéristiques du moyen de diffusion associé à chaque terminal sélectionné et la donnée à diffuser.

13. Plate-forme conforme à la revendication 12, comprenant un moyen (GMD, MS4) recevant un résultat de diffusion depuis chaque moyen de diffusion (DF) associé à un terminal sélectionné (TD) pour indiquer si le moyen de diffusion a été appelé par la plate-forme et si une donnée a été diffusée par le moyen de diffusion vers le terminal sélectionné.

14. Plate-forme conforme à la revendication 12 ou 13, traitant des résultats de diffusion transmis par les moyens de diffusion (DF) à la plate-forme (GMD) selon une stratégie de résultat.

## Claims

1. Method of transmitting data (DATA) to terminals (TD) of an intended recipient via transmission means (DF) in response to a sender request (REX) containing the data and an identifier (ID) of the recipient, identifiers (ITD) and characteristics of the terminals of the recipient being looked up (E1) in accordance with the identifier of the recipient (ID) in a first memory (MI1), **characterised by** the following steps:
- determining (E2) for the data the types of media (TYME) by means of which the data may be transmitted to the terminals (TD) of the recipient,
- selecting (E3) the identifiers of the terminals of the recipient having types of media (TYTD) by which the terminals of the recipient are capable of receiving the data and which are compatible with one of the types of media (TYME) for the data (DATA),
- selecting (E4) from a second memory (MI2) identifiers (IDF) and characteristics of transmission means (DF) each having a type of media (TYDF) compatible with at least one of the types of media (TYME) for the data (DATA),
- associating (E7) the identifier (ITD) of each of the selected terminals (TD) with the identifier (IDF) of a selected transmission means (DF) having a type of media (TYDF) compatible with that (TYTD) of the terminal, and
- preparing (E9) a multi-transmission request (RMD) comprising at least one call sequence for calling the selected terminals of the recipient from the respective associated transmission means, the call sequence containing the characteristics of each selected terminal which is to be called, the characteristics of the transmission means associated with each terminal selected and the data to be transmitted.

2. Method according to claim 1, wherein the types of media (TYME) for the data are determined according to a content strategy (ISC) identified in the sender request (REX).

3. Method according to claim 1 or 2, comprising a designation (E5) of selected terminal identifiers (ITD) according to an access strategy (ISAC) identified in the sender request (REX) or by default for the recipient and the data.

4. Method according to claim 3, wherein the characteristics of a terminal the identifier (ITD) of which is designated contain an availability range which is compared with an accessibility range for the recipient according to the access strategy identified so that the data is only transmitted to the terminal during the parts which are common to the ranges.

5. Method according to claim 3 or 4, wherein the access strategy (ISAC) contains the call sequence to be introduced into the multi-transmission request (RMD) for successively calling the selected terminals of the recipient the identifiers of which have been designated, from the respective associated transmission means.

6. Method according to any one of claims 3 to 5, wherein the association (E6) of the designated identifier (ITD) of a selected terminal with the identifier (IDF) of a transmission means (DF) having a type of media (TYDF) compatible with that (TYTD) of the selected terminal is determined by a call strategy (ISAP) identified in the sender request (REX) or by default for the recipient and the data.

7. Method according to claim 6, wherein the call strategy: (ISAP) comprises a number and a frequency of attempts at calling each terminal the identifier of which is designated and call periods for each terminal, to be introduced into the multi-transmission request (RMD).

8. Method according to any one of claims 1 to 7, comprising converting the format (E8) of the data before setting up the multi-transmission request (RMD).

9. Method according to any one of claims 1 to 8, wherein the data is transmitted to a number of recipients each having respective terminals, the sender request (REX) further contains identifiers of the recipients or the identifier of a list of the recipients which may be identified in the first memory (MI1), and the multi-transmission request (RMD) further contains a plurality of call sequences to respective terminals selected for the recipients.

10. Method according to claim 9, wherein a plurality of data are transmitted respectively to the recipients, the call sequence for a recipient in the multi-transmission request (RMD) further containing the data to be transmitted to the selected terminals of the recipient.

11. Method according to any one of claims 1 to 10, using the programming language XML.

12. Platform (GMD) for transmitting data (DATA) to the terminals (TD) of an intended recipient via transmission means (DF) in response to a sender request (REX) containing the data and an identifier (ID) of the recipient, identifiers (ITD) and characteristics of the terminals of the recipient being looked up (E1) according to the identifier of the recipient (ID) in a first memory (MI1) of the platform, **characterised in that** it comprises:
- means (ESD, MS1) for determining for the data the types of media (TYME) by means of which the data may be transmitted to the terminals (TD) of the recipient,
- means (ESD) for selecting the identifiers of the terminals of the recipient having types of media (TYTD) by which the terminals of the recipient are capable of receiving the data and which are compatible with one of the types of media (TYME) for the data (DATA),
- means (ESD) for selecting, from a second memory (MI2) of the platform, identifiers (IDF) and characteristics of transmission means (DF) each having a type of media (TYDP) compatible with at least one of the types of media (TYME) for the data (DATA),
- means (ESD) for associating the identifier (ITD) of each of the selected terminals (TD) with the identifier (IDF) of a selected transmission means (DF) having a type of media (TYDF) compatible with that (TYTD) of the terminal, and
- means (ESD) for preparing a multi-transmission request (RMD) comprising at least one call sequence for calling the selected terminals of the recipient from the respective associated transmission means, the call sequence containing the characteristics of each selected terminal which is to be called, the characteristics of the transmission means associated with each terminal selected and the data to be transmitted.

13. Platform according to claim 12, comprising means (GMD, MS4) receiving a transmission result from each transmission means (DF) associated with a selected terminal (TD) to indicate whether the transmission means has been called by the platform and whether data has been transmitted by the transmission means to the selected terminal.

14. Platform according to claim 12 or 13, processing the transmission results transmitted by the transmission means (DF) to the platform (GMD) according to a results strategy.

## Patentansprüche

1. Verfahren zur Übertragung von Daten (DATA) an Endgeräte (TD) eines Empfängers durch Übertragungsmittel (DF) in Reaktion auf eine Absenderabfrage (REX), die die Daten und eine Kennung (ID) des Empfängers enthält, wobei Kennungen (ITD) und Merkmale der Endgeräte des Empfängers entsprechend der Empfängerkennung (ID) in einem ersten Speicher (MI1) aufgesucht (E1) werden, **gekennzeichnet durch** die folgenden Schritte:
- Bestimmung (E2) von Medienarten (TYME) für die Daten, **durch** die die Daten zu den Endgeräten (TD) des Empfängers zu übertragen sind,
- Auswahl (E3) der Kennungen der Endgeräte des Empfängers, die über Medienarten (TYTD) verfügen, **durch** die die Empfängerendgeräte in der Lage sind, die Daten zu empfangen, und die mit einer der Medienarten (TYME) für die Daten (DATA) kompatibel sind,
- Auswahl (E4) der Kennungen (IDF) und von Merkmalen von Übertragungsmitteln (DF) in einem zweiten Speicher (MI2), die jeweils über eine Medienart (TYDF) verfügen, die mit mindestens einer der Medienarten (TYME) für die Daten (DATA) kompatibel sind,
- Zuordnung (E7) der Kennung (ITD) jedes der ausgewählten Endgeräte (TD) zur Kennung (IDF) eines ausgewählten Übertragungsmittels (DF), das über eine Medienart (TYDF) verfügt, die mit der (TYTD) des Endgerätes kompatibel ist, und
- Erstellung (E9) einer Mehrfachübertragungsabfrage (RMD), die mindestens eine Rufsequenz enthält, um die ausgewählten Endgeräte des Empfängers jeweils von den zugehörigen Übertragungsmitteln aus anzurufen, wobei die Rufsequenz die Merkmale jedes ausgewählten anzurufenden Endgerätes enthält, die Merkmale des jedem ausgewählten Endgerät zugeordneten Übertragungsmittels und die zu übertragenden Daten.

2. Verfahren nach Patentanspruch 1, nach dem die Medienarten (TYME) für die Daten nach einer Inhaltsstrategie (ISC) bestimmt werden, die in der Absenderabfrage (REX) identifiziert ist.

3. Verfahren nach Patentanspruch 1 oder 2, eine Benennung (E5) von Kennungen ausgewählter Endgeräte (ITD) nach einer Zugangsstrategie (ISAC) umfassend, die in der Absenderabfrage (REX) angegeben ist oder für den Empfänger und die Daten voreingestellt ist.

4. Verfahren nach Patentanspruch 3, nach dem die Merkmale eines Endgerätes, dessen Kennung (ITD) benannt wurde, einen Verfügbarkeitszeitraum enthalten, der nach der angegebenen Zugangsstrategie mit einem Zugänglichkeitszeitraum des Empfängers verglichen wird, damit die Daten nur während gemeinsamer Abschnitte der Zeiträume an das Endgerät übertragen werden.

5. Verfahren nach Patentanspruch 3 oder 4, nach dem die Zugangsstrategie (ISAC) die Rufsequenz enthält, die in die Mehrfachübertragungsabfrage (RMD) einzuführen ist, um nacheinander die ausgewählten Endgeräte des Empfängers, deren Kennungen bestimmt wurden, von den jeweils zugeordneten Übertragungsmitteln anzurufen.

6. Verfahren nach irgendeinem der Patentansprüche 3 bis 5, nach dem die Zuordnung (E6) der benannten Kennung (ITD) eines ausgewählten Endgerätes zur Kennung (IDF) eines Übertragungsmittels (DF), das über eine Medienart (TYDF) verfügt, die mit der (TYTD) des ausgewählten Endgerätes kompatibel ist, durch eine Anrufstrategie (ISAP) bestimmt wird, die in der Absenderabfrage (REX) angegeben ist oder für den Empfänger und die Daten voreingestellt ist.

7. Verfahren nach Patentanspruch 6, nach dem die Anrufstrategie (ISAP) eine Zahl und eine Frequenz von Anrufversuchen für jedes Endgerät, dessen Kennung benannt wurde, und Anrufzeiten für jedes Endgerät umfasst, die in die Mehrfachübertragungsabfrage (RMD) einzufügen sind.

8. Verfahren nach irgendeinem der Patentansprüche 1 bis 7, eine Formatkonvertierung (E8) der Daten vor Erstellung der Mehrfachübertragungsabfrage (RMD) umfassend.

9. Verfahren nach irgendeinem der Patentansprüche 1 bis 8, nach dem die Daten an mehrere Empfänger übertragen werden, die jeweils entsprechende Endgeräte haben, die Absenderabfrage (REX) außerdem Kennungen (ID) der Empfänger oder die Kennung einer Liste der Empfänger enthält, die im ersten Speicher (Ml1) identifizierbar sind, und die Mehrfachübertragungsabfrage (RMD) außerdem mehrere Rufsequenzen für ausgewählte Endgeräte jeweils für die Empfänger enthält.

10. Verfahren nach Patentanspruch 9, nach dem mehrere Datensätze jeweils an die Empfänger übertragen werden, wobei die Rufsequenz für einen Empfänger in der Mehrfachübertragungsabfrage (RMD) außerdem die an die ausgewählten Endgeräte des Empfängers zu übertragenden Daten enthält.

11. Verfahren nach irgendeinem der Patentansprüche 1 bis 10, in dem die Programmiersprache XML verwendet wird.

12. Plattform (GMD) zur Übertragung von Daten (DATA) an Endgeräte (TD) eines Empfängers durch Übertragungsmittel (DF) in Reaktion auf eine Absenderabfrage (REX), die die Daten enthält und eine Kennung (ID) des Empfängers, wobei Kennungen (ITD) und Merkmale der Endgeräte des Empfängers entsprechend der Empfängerkennung (ID) in einem ersten Speicher (MI1) der Plattform aufgesucht (E1) werden, **dadurch gekennzeichnet, dass** sie umfasst
- ein Mittel (ESD, MS1) zur Bestimmung der Medienarten (TYME) für die Daten, durch die die Daten an die Endgeräte (TD) des Empfängers zu übertragen sind,
- ein Mittel (ESD) zur Auswahl der Endgerätekennungen des Empfängers, die über Medienarten (TYTD) verfügen, über die die Empfängerendgeräte in der Lage sind, die Daten zu empfangen und die mit einer der Medienarten (TYME) für die Daten (DATA) kompatibel sind,
- ein Mittel (ESD) zur Auswahl von Kennungen (IDF) und von Merkmalen von Obertragungsmittein (DF), die jeweils über eine Medienart (TYDF) verfügen, die mit mindestens einer der Medienarten (TYME) für die Daten (DATA) kompatibel sind, in einem zweiten Speicher (MI2) der Plattform,
- ein Mittel (ESD) zur Zuordnung der Kennung (ITD) jedes der ausgewählten Endgeräte (TD) zur Kennung (IDF) eines ausgewählten Übertragungsmittels (DF), das über eine Medienart (TYDF) verfügt, die mit der (TYTD) des Endgerätes übereinstimmt, und
- ein Mittel (ESD) zur Erstellung einer Mehrfachübertragungsabfrage (RMD), die mindestens eine Rufsequenz umfasst, um die ausgewählten Endgeräte des Empfängers jeweils von den zugeordneten Übertragungsmitteln aus anzurufen, wobei die Rufsequenz die Merkmale jedes ausgewählten anzurufenden Endgerätes enthält, die Merkmale des jedem ausgewählten Endgerät zugeordneten Übertragungsmittels und die zu übertragenden Daten.

13. Plattform nach Patentanspruch 12, ein Mittel (GMD, MS4) umfassend, das von jedem Übertragungsmittel (DF), das einem ausgewählten Endgerät (TD) zugeordnet ist, ein Übertragungsergebnis empfängt, um mitzuteilen, ob das Übertragungsmittel von der Plattform angerufen wurde und ob durch das Übertragungsmittel Daten an das ausgewählte Endgerät übertragen wurden.

14. Plattform nach Patentanspruch 12, Übertragungsergebnisse, die von den Übertragungsmitteln (DF) an die Plattform (GMD) übertragen werden, nach einer Ergebnisstrategie bearbeitend.
